# EUROPÄISCHE PATENTSCHRIFT

(11) **EP 0 440 975 B1**
(45) Veröffentlichungstag und Bekanntmachung des Hinweises auf die Patenterteilung: **23.08.1995**
(21) Anmeldenummer: 90125347.6
(22) Anmeldetag: 22.12.1990
(51) Int. Cl.: C12G 3/08

(54) **Gärprodukt mit vermindertem Ethanolgehalt**
Fermentation product with reduced ethanol content
Produit de fermentation à teneur réduite en éthanol

(30) Priorität: 05.02.1990 DE 4003404
(43) Veröffentlichungstag der Anmeldung: 14.08.1991
(73) Patentinhaber: MOSELLAND E.G. WINZERGENOSSENSCHAFT, D-54469 Bernkastel-Kues (DE)
(72) Erfinder: Bärwald, Günter, Prof. Dr. Ing., W-1000 Berlin 28 (DE); Pilz, Hermann, Dr. Dipl.-Ing. agr., W-5556 Mülheim-Mosel (DE)
(74) Vertreter: Patentanwälte Dipl.-Ing. R. Splanemann Dr. B. Reitzner Dipl.-Ing. K. Baronetzky

(56) Entgegenhaltungen:
- EP-A- 245 845
- CH-A- 602 025
- NL-A- 7 207 340

## Beschreibung

Die Erfindung betrifft ein verfahren zur Herstellung von Gärprodukten mit vermindertem Ethanolgehalt aus zuckerhaltigen Fruchtsaft-Substraten.

Es ist bekannt, alkoholarme und entalkoholisierte Gärprodukte dadurch herzustellen, daß z.B. der Fruchtsaft vor der alkoholischen Gärung durch fraktionierte Kristallisation in Teilsäfte mit hohem bzw. niedrigem Zuckeranteil zerlegt und der Teilsaft mit niedrigem Zuckergehalt getrennt zu einem alkoholarmen Wein vergoren wird (EP-A-0 177 282).

Es ist ferner bekannt, nach anderen thermischen Verfahren Weine mit vermindertem Ethanolgehalt herzustellen, z.B. durch Gefrieren (US-A-4 468 407), wobei die ausgefrorene Teilmenge ethanolarm und die flüssige Teilmenge mit Ethanol und Aromastoffen angereichert ist.

Bei anderen thermischen verfahren wird aus dem fertigen Wein das Ethanol zusammen mit den in ihm gelösten unpolaren Aromastoffen sowie mit den polaren aromatischen Verbindungen ähnlichen Siedeverhaltens durch Destillation unter Normaldruck oder bei reduziertem Druck entfernt, wie es z.B. in der EP-A-0 193 206, der DE-A-35 06 820, der EP-A-0 070 845 und der DE-A-3617654 beschrieben ist.

Es sind auch andere Verfahren bekannt, bei denen Membranen zur Stofftrennung verwendet werden, wie z.B. die Dialyse nach der DE-A-36 00 352 oder die Umkehrosmose (reverse Osmose) bei den Verfahren nach den EP-A-0 162 240, 0 208 612, 0 202 590 und 0 242 384, wobei nach dem letzteren Verfahren das Ethanol zusätzlich durch nicht mit Wasser mischbare organische Lösemittel ausgetragen wird.

Andere Verfahren zur Verminderung des Ethanolgehaltes beziehen sich auf die Extraktion mit Kohlendioxid im überkritischen Bereich (EP-A-0 228 572) allein, oder, wie bei den vorgenannten Verfahren ebenfalls üblich, in Kombination mit thermischen Verfahren.

Die Nachteile dieser thermischen Verfahren liegen darin, daß das eigentlich fertige Gärprodukt durch eine oder mehrere zusätzliche Behandlungsmaßnahmen neben der beabsichtigten Verminderung des Ethanolgehalts auch Veränderungen anderer charakteristischer Inhaltsstoffe erfährt. Bei thermischen Verfahren besteht unter anderem die Gefahr der Hydroxymethylfurfural(HMF)-Bildung, die ein Indikator für unerwünschte thermische Veränderungen ist und im "Kochgeschmack" dem Fertigprodukt einen untypischen und unerwünschten Charakter verleiht.

Es ist bekannt, dadurch eine gewisse verminderung des Ethanolgehaltes von Gärprodukten zu erzielen, daß ein Anteil der vergärbaren Zucker, nämlich die Glucose, vor Beginn der alkoholischen Gärung mittels Hefe durch Oxidation mittels zugefügter Glukoseoxidase, wie in der EP-A-0 194 043 beschrieben, oder durch Beimpfen mit Gluconobacter oxydans, wie aus der EP-A-0 223 705 hervorgeht, in Gluconsäure umgesetzt wird. Die dabei entstehende Gluconsäure muß wieder aus dem Gärprodukt entfernt werden, wozu die Fällreaktion mittels Calciumcarbonat dient. Wieweit sich durch die vorstehend beschriebenen Verfahren eine Verminderung des Ethanolgehalts erzielen läßt, hängt unmittelbar vom aktuellen Gehalt der zur alkoholischen Gärung verwendeten Fruchtsäfte bzw. Substrate an Glukose ab. Während Apfelsaft bis zu 70 % Fructose bei geringfügig vorhandener Saccharose enthalten kann, sind auch bei Traubensaft in der Regel die Fructosegehalte höher als diejenigen der Glucose, so daß die Verminderung des Ethanolgehalts nach diesen oxidativen Verfahren unter 50 % des zu erwartenden Ethanolgehaltes bei vollständiger Vergärung der vergärbaren Zucker betragen muß. Bei dem Verfahren nach der EP-A-0 194 043, bei dem Glucoseoxidase dem Fruchtsaft (Most) zugesetzt wird, werden bis zu 96 % der vorhandenen Glucose durch Begasen mit Luft zu Gluconsäure oxidiert, bei demjenigen mit vorgelegter Lebendkultur an Gluconobacter oxydans und Belüftung des Substrats zwischen 70 und 150 g Glucose pro Liter, wobei hier ein Teil dieses Zuckers durch die Bakterien zu Gluconsäure oxidiert, der andere Teil durch die Bakterien auf andere Weise metabolisiert wird.

Die vorstehend genannten Verfahren zur Verminderung des Ethanolgehalts von Gärprodukten mit Fruchtsaft (einschließlich Traubenmost) als Substrat weisen bei den thermischen Verfahren und denjenigen auf der Grundlage der Stofftrennung mittels Membranen die für das Gärprodukt nachteiligen Veränderungen durch Hitzeeinwirkung sowie durch Austragen von Aromastoffen mit der Alkoholfraktion auf. Bei diesen Verfahren, die vom alkoholhaltigen Produkt ausgehen, ist ein besonderer Schutz vor Oxidation vorzusehen, wie es in der DE-A-36 17 654 durch Einbringen einer "Oxidationsverhinderungsvorrichtung" explizit zum Ausdruck kommt. Die bekannten Verfahren, über die Oxidation von Glucose zu Gärprodukten mit vermindertem Ethanolgehalt zu gelangen, sind hinsichtlich des Wirkungsgrades an die prozentuale Menge der Glucose im natürlichen Gemisch der Zucker des Fruchtsaftes (einschließlich des Traubenmostes) gebunden.

Die DE-A-36 16 093 betrifft ein Verfahren zur Herstellung von alkoholarmen oder alkoholfreien Bieren, wobei von einem alkoholhaltigen Bier mit einem Alkoholgehalt von etwa 4 % ausgegangen wird, das nur noch einen geringen Gehalt an vergärbaren Substanzen (etwa 0,25 bis 1,0 Gew.-%) aufweist. Dieses Bier wird unter aeroben Bedingungen mit einer Hefe behandelt. Ein Teil des vorhandenen Ethanols verdampft, und die Hefe verwertet einen Teil der vorhandenen vergärbaren Substanzen unter Erzeugung von biertypischen Aromastoffen und baut gegebenfalls einen weiteren Teil des vorhandenen Ethanols ab. Die verwendete Hefe ist also in der Lage, die mit dem Alkohol ausgetriebenen biertypischen Aromastoffe durch Biosynthese neu zu produzieren, wobei sie zunächst die vergärbaren Substanzen veratmet und dabei die Zellzahl vermehrt. Ein Veratmung von Ethanol findet nicht bzw. erst nach längerer Zeit statt, da die Umstellung des Enzymsystems sehr lange dauert.

Die CH-A-572 520 betrifft ein Verfahren zur Herstellung von Bier und bierähnlichen Gärgetränken durch Fermentieren von Würzen, wobei die Fermentierung bzw. ein wesentlicher Teil derselben, aerob als Verhefung geführt wird, indem in die Würze während ihrer Fermentierung Sauerstoff oder ein sauerstoffhaltiges Gas eingeführt wird. Ausgegangen wird von einer Suspension von Hefe in Brauwasser, der die Würze zulaufen gelassen wird, d.h. der Gehalt an vergärbaren Substanzen ist zu Beginn der Fermentation sehr gering und nimmt auch bei weiterem Zulauf der Würze nicht nennenswert zu, da sich die vergärbaren Substanzen infolge des Sauerstoffüberschusses sofort in Zellsubstanz und Atmungsstoffwechsel umsetzen.

Die CH-A-602 025 betrifft ein Verfahren zur Herstellung von alkoholarmen bzw. alkoholfreien Getränken, insbesondere alkoholarmem Bier, wobei die Vergärung der Würze unter aeroben Bedingungen durchgeführt wird. Über die weiteren Bedingungen finden sich keine Angaben.

Der Erfindung liegt die Aufgabe zugrunde, ein Verfahren zur Herstellung von Gärprodukten mit vermindertem Ethanolgehalt aus zuckerhaltigen Fruchtsaft-Substraten zur Verfügung zu stellen, wobei das Substrat ohne Zusatz von Enzymen oder Bakterien, ohne thermische Belastung oder Destillation, Trennverfahren an Membranen oder Extraktion behandelt wird.

Ein solches Verfahren ist dadurch gekennzeichnet, daß man eine erste Teilmenge des Substrats mit einem Gehalt an vergärbaren Zuckern von 5 bis 30 Gew.-% zur Fermentation mit 0,01 bis 5 Gew.-% Hefe (berechnet als Trockensubstanz) und gegebenenfalls mit assimilierbaren Stickstoff- und/oder Phosphorverbindungen versetzt und mit 0,1 bis 2 Volumteilen Luft bzw. der Luft äquivalenten Menge Sauerstoff pro Volumteil Substrat und Minute behandelt, bis sich im Substrat ein Ethanolgehalt von 1 bis 10 %vol, insbesondere bis 7,5 %vol, eingestellt hat; worauf man eine zweite Teilmenge des Substrats unter fortgesetzter Begasung mit Luft bzw. mit Sauerstoff zudosiert.

In der ersten Stufe wird Hefe mit einem hohen Gehalt an atmungsaktiven Enzymen erzeugt, die überraschenderweise in der zweiten Stufe in der Lage ist, Alkohol zu veratmen. Ferner ist überraschend, daß die Hefe in der zweiten Stufe beim Zudosieren der zweiten Teilmenge des Substrats kaum noch wächst. Ihren Energiebedarf deckt die Hefe in der zweiten Stufe aufgrund ihrer hohen Atmungsenzymaktivität durch Veratmung von Ethanol, wodurch der Ethanolgehalt vermindert wird. Ein Teil des Ethanols wird auch bei der Begasung mit Luft ausgetrieben. Überraschenderweise treten bei der Begasung auch keine Geschmacks- oder Aromaverluste durch Oxidation auf, weil die Hefe aufgrund ihres erheblich beschleunigten Stoffwechsels laufend Aromasubstanzen in höheren Konzentrationen erzeugt. Bisher bestand ein Vorurteil gegen eine aerobe Gärung bei der Weinherstellung, unter anderem wegen der gefürchteten Bildung von Acetaldehyd, Essigsäure und anderer Oxidationsprodukte.

Die erste Teilmenge des Substrats beträgt vorzugweise 20 bis 80 Gew.-%, insbesondere 30 bis 60 Gew.-% des Gesamtsubstrats.

Die in der ersten Stufe zugesetzte Hefe enthält üblicherweise bereits assimilierbare Stickstoff- und/oder Phosphorverbindungen. Zur Beschleunigung des Hefewachstums setzt man diese Verbindungen jedoch vorzugsweise der ersten Teilmenge des Substrats gesondert zu, vorzugsweise in Mengen von 0,01 bis 2 Gew.-%, insbesondere in Mengen von 0,03 bis 1 Gew.-%.

Vorzugsweise führt man die Fermentation (in beiden Stufen) bei 10 bis 40°C, insbesondere bei 20 bis 30°C durch, wobei man vorzugsweise einen pH-Wert von 2 bis 6, insbesondere von 2,5 bis 4 einhält.

Die erste Teilmenge des Substrats wird vorzugsweise mit 0,5 bis 1,5 Volumteilen Luft bzw. der Luft äquivalenten Menge Sauerstoff je Volumteil Substrat und Minute behandelt. Die zweite Teilmenge des Substrats wird unter fortgesetzter Begasung mit Luft bzw. Sauerstoff, vorzugsweise mit einer Zugaberate von 0,5 bis 10 Gew.-%, insbesondere von 2 bis 8 Gew.-% (bezogen auf das gesamte Substrat) pro Stunde zudosiert.

Nach Beendigung der Zudosierung der zweiten Teilmenge des Substrats kann zur weiteren Verminderung des Ethanolgehalts die Begasung mit Luft bzw. Sauerstoff fortgesetzt werden, bis die vergärbaren Zucker weitgehend verbraucht sind.

Danach kann sich noch eine anaerobe Gärung anschließen, was insbesondere dann zweckmäßig ist, wenn ein definierter Ethanolgehalt eingestellt werden soll, was aus Deklarationsgründen manchmal erforderlich ist. Bei der anaeroben Gärung erhöht sich der Alkoholgehalt leicht; ferner finden eine Bukettverbesserung sowie ein Säureabbau, eine Weinsteinausfällung und eine Glyzerinanreicherung statt.

Die verwendeten Substrate sind vorzugweise keimfrei und enthalten insbesondere keine Essigbakterien.

Die erfindungsgemäß verwendeten Hefen sind an sich bekannt (vgl. beispielsweise H.H. Dittrich: Mikrobiologie des Weines, 1977, Verlag E. Ulmer, Stuttgart; M.Glaubitz/R. Koch: Atlas der Gärungsorganismen, 4.Aufl. 1983, Verlag P. Parey, Berlin und Hamburg).Diese Hefen wurden bisher entweder bei der anaeroben Fermentation (alkoholische Gärung) oder bei der aeroben Fermentation (Hefezüchtung) verwendet (vgl. beispielsweise H. Dellweg: Biotechnologie, 1987, Verlag Chemie, Weinheim). Nicht bekannt ist jedoch die Fähigkeit dieser Kulturhefen, in einem zuckerhaltigen Substrat durch Zufuhr von Luftsauerstoff oder allgemein Sauerstoff unter limitierten Substratbedingungen den gebildeten Ethanol wieder zu veratmen, d.h. den Energiebedarf durch Ethanol zu decken. Die irreversible Oxidation von Ethanol zu Essig- bzw. Gluconsäure durch spezielle Bakterien ist bekannt; bei der Herstellung der erfindungsgemäßen Gärprodukte werden jedoch weder verstärkte Essigsäure, noch Gluconsäure gebildet. Auch der Acetaldehyd, der als Oxidationsprodukt von Ethanol bei der Sherryherstellung, einem oxidativ ablaufenden Verfahren, anfällt, ist im erfindungsgemäßen Gärprodukt nicht über den geruchlichen und geschmacklichen Schwellenwert von 30 mg/l hinaus nachweisbar.

Vorzugsweise verwendet man erfindungsgemäß die auf Früchten und in frisch gekelterten Säften natürlich vorkommenden gärfähigen Hefen, insbesondere in Form von Reinkulturen. Diese Hefen umfassen z.B. Stämme aus den Gattungen Saccharomyces, Schizosaccharomyces, Saccharomycodes, Torulopsis und Kluyveromyces, wobei die Auswahl jedoch nicht auf diese Gattungen oder die Anwendung einzelner Spezies beschränkt ist.

Man kann auch immobillsierte Hefen verwenden. Zur Immobilisierung werden die Hefezellen mit einem Trägereiweiß (z.B. Gelatine) gemischt und mit Glutardialdehyd quervernetzt. Eine andere Möglichkeit besteht in einem Einschluß der Zellen in eine polymere Matrix, z.B. Polyacrylamid. In vielen Fällen werden die Zellen in natürliche Polymere, wie Agar, Collagen, Kappa-Carrageen oder Alginat eingebettet. Die immobilisierten Hefen haben den Vorteil, daß sie sich nur unwesentlich vermehren.

Bei der Herstellung der erfindungsgemäßen Gärprodukte wird das Fruchtsaft Gärsubstrat in einen nach der Art eines Bioreaktors ausgestatteten Behälter, der eine Belüftungs- bzw. Begasungseinrichtung enthält, gefüllt. Die Gasverteilung in der Füllung kann durch Vorverdichtung des Gases mit Hilfe eines Kompressors, durch liegende oder schräg angeordnete, perforierte Verteilungsrohre, durch Ringleitungen oder durch Düsen im unteren Teil des Behälters erfolgen, wobei die Blasen möglichst fein verteilt gleichmäßig über den Behälterquerschnitt aufsteigen. Eine andere Technik ist die Gasverteilung durch ein Saugsystem, eine weitere die Gasverteilung durch Flüssigkeitspumpen oder mittels bewegter Einbauten oder Rühren oder im Zwangsumlauf. Die Fermentation kann auch in nichteingeschränkter Weise in einem Durchflußreaktor oder in mehreren hintereinandergeschalteten Behältern für die einzelnen Fermentationsstufen oder Fermentationsabschnitte ausgeführt werden. In der ersten Phase der Fermentation werden die Fruchtsaft Gärsubstrate, auch solche, die sich bereits in Gärung befinden, mit einer lebenden Hefekultur sowie mit organischen und/oder anorganischen assimilierbaren Stickstoff- und/oder Phosphorverbindungen, wie beispielsweise Hefeextrakt, oder inaktivierter Hefe, Ammoniumphosphat- und Ammoniumsulfatverbindungen oder anderen geeigneten stickstoffhaltigen Verbindungen versetzt und mit Luft oder Sauerstoff begast. Die lebende Hefekultur kann aus einer Stammkultur oder aus einer Mischung (Mischkultur) verschiedener Hefespezies bestehen. Beispielsweise wurde ein mit Saccharomyces cerevisiae var. ellipsoideus, einer typischen Weinhefe, sowie mit Diammoniumhydrogenphosphat und Hefeextrakt versetzter Traubenmost von 51 Grad Oechsle mit einer Belüftungsrate von 0,25 Volumteilen Luft je Volumteil Flüssigkeit und Minute in einem Rührfermenter bei 25°C und einem pH-Wert von 3,1 begast, wobei sich nach Verbrauch der vorhandenen assimilierbaren Zucker ein Ethanolgehalt von 4 %vol einstellte. Wurde die Belüftung verstärkt, beispielsweise durch Erhöhung des Durchsatzes auf 0,5 Volumteile Luft je Volumteil Flüssigkeit und Minute, lag der entstandene Ethanolgehalt bei 3%vol und bei weiterer Steigerung des Luftdurchsatzes auf 1 Volumteil je Volumteil Flüssigkeit und Minute nur noch bei 2 %vol. Wenn dagegen dieser Traubenmost ohne Belüftung unter den gleichen Ansatzbedingungen vergoren wurde, betrug der Ethanolgehalt 6,7 %vol.

Wenn der Anteil der assimilierbaren Zucker in der ersten Teilmenge des Substrats verbraucht war und die Belüftung fortgesetzt wurde, ohne daß weiteres Substrat zudosiert wurde, konnte der Ethanolgehalt zwar noch weiter vermindert werden. Dabei entstanden allerdings dem Aroma des Gärprodukts abträgliche Oxidationsverbindungen des Ethanols, wie Acetaldehyd, Essigsäure und Esterverbindungen. Es war nicht möglich, ein vom Aromaprofil her weintypisches Gärprodukt aus dem Traubenmost allein durch das Belüften der zuckerhaltigen Substrate zu erzielen.

Zur Steuerung der Fermentation wird der pH-Wert des Fermentationsgutes im allgemeinen auf 2,0 bis 6,0, vorzugsweise auf 2,5 bis 4 eingestellt, worauf der Fruchtsaft oder die entsprechenden, bereits in Gärung befindlichen Produkte auf Fermentationstemperaturen von 10 bis 40°C, vorzugsweise von 15 bis 32°C, durch Temperieren gehalten werden. Temperaturen unter 10°C verlangsamen die Fermentationsgeschwindigkeit und solche über 40°C führen bei einigen Hefen zu einem Aktivitätsverlust. Bei höheren Fermentationstemperaturen können auch leichtflüchtige, am Bukett beteiligte Aromastoffe ausgetrieben werden.

In der zweiten Stufe (Zulaufphase) erfolgt die Begasung mit Luft, vorzugsweise in einer Menge von 0,25 bis 1,25 Volumteilen je Volumteil Substrat und Minute, im allgemeinen so lange, bis sich ein Ethanolgehalt zwischen 0,1 und 10 %vol, vorzugsweise 1 bis 5 %vol, eingestellt hat.

Die Hefe wird dann vom Gärprodukt nach herkömmmlichen Verfahren, beispielsweise durch Separieren oder Abhebern vom Sediment weitgehend abgetrennt. Der im Gärprodukt verbleibende Heferest bewirkt, falls gewünscht, die anschließende Nachgärung, wenn der Ethanolgehalt auf einen bestimmten Wert eingestellt werden soll. Diese Stufe wird anaerob geführt. Soll die anaerobe Nachgärung intensiviert werden, so kann dem Gärprodukt nochmals eine kleine Menge an zuckerhaltigem Fruchtsaft zugesetzt werden.

Das erfindungsgemäß hergestellte Gärprodukt hat gegenüber anderen Gärprodukten mit vermindertem Ethanolgehalt den Vorteil, daß die im Hefestoffwechsel neu entstehenden Begleitstoffe weitgehend geschont werden. Weiterhin bleiben die typischen, bei der Gärung entstehenden Aromastoffe sowie die aus den zuckerhaltigen Fruchtsäften und aus den anderen zuckerhaltigen Gärsubstraten stammenden Aromastoffe sowie das Glyzerin als nichtflüchtiges Stoffwechselprodukt der Hefen erhalten. Zur Herstellung der erfindungsgemäßen Gärprodukte sind keine höheren Temperaturen sowie Lösemittelextraktionen und andere komplizierte und aufwendige Verfahrensstufen erforderlich, die zu einem Verlust an anderen Stoffwechselprodukten der Hefe außer Ethanol führen.

Die erfindungsgemäße hergestellten Gärprodukte können als solche oder als Zwischenprodukte zur Herstellung von Schaumwein, Fruchtschaumwein, weinhaltigen und/oder weinähnlichen Getränken mit und ohne Kohlensäure verwendet werden.

Gegenstand der Erfindung ist ferner die Verwendung der bei dem erfindungsgemäßen Verfahren Gärproduktes anfallenden Hefe für pharmazeutische und diätetische Zwecke. Diese vorteilhafte Verwendung ist durch den hohen Gehalt der Hefe an Atmungsenzymen bedingt.

Die Erfindung ist durch die nachstehenden Beispiele in Verbindung mit einem Vergleichsbeispiel erläutert.

### Vergleichsbeispiel

Es wurde jeweils 1 Liter Traubensüßmost mit folgenden analytischen Daten:
- Dichte: 1,051 g/cm³ (20°C);
- fermentierbare Hexosen: 116,1 g/l, dabei Glucose = 54,9 g/l; Fructose = 61,2 g/l;
- pH-Wert = 3,07;
- vorhandener Ethanol: 1,0 g/l (leicht angegorener Traubensüßmost)
mit 0,2 g/l Hefe (berechnet als Trockenmasse) aus einer Vorzucht oder als Trockenhefe (Lyophilysat) versetzt und bei 25 ± 0,5°C entsprechend den nachstehend angegebenen Varianten A bis D vergoren.

Die Kontrollanalysen zur Bestimmung von Ethanol, Glucose und Fructose wurden mittels enzymatischer Methoden (Boehriger-Testkombination) ausgeführt, die Zucker wurden zusätzlich nach der HPLC-Methode bestimmt.

### Variante A (Klassisches Verfahren ohne Verminderung des Ethanolgehalts)

Die Vergärung wurde anaerob als statische Kultur bis zur Endvergärung ausgeführt. Die Endvergärung war nach 160 Stunden erreicht, der Ethanolgehalt betrug 6,66 %vol und der pH-Wert 2,95; die Kontrolle auf Restzucker verlief negativ, die Dichte am Ende der Vergärung betrug 1,012 g/cm³. Die Hefemasse, berechnet als Trockenmasse, betrug am Ende der Vergärung 0,8 g/l.

### Variante B (Klassisches Verfahren ohne Verminderung des Ethanolgehalts, mit "Gärsalz"-Zusatz)

Dem Traubensüßmost wurden zugesetzt:
0,25 g Hefeautolysat-Trockenmasse (enthält 0,6 mg/l Vitamin B₁);
0,3 g Diammoniumphosphat.

Der Ansatz betrug 1 Liter. Die Vergärung wurde wie bei Variante A anaerob als statische Kultur bis zur Endvergärung ausgeführt. Die Endvergärung war nach 132 Stunden erreicht. Der Ethanolgehalt betrug 6,77 %vol, der pH-Wert 2,95. Die Kontrolle auf Restzucker verlief negativ. Die Dichte am Ende der Vergärung betrug 1,012 g/cm³. Die Hefemasse, berechnet als Trockenmasse, betrug am Ende der Vergärung 1,0 g/l.

### Variante C (Verminderung des Ethanolgehalts durch Begasung mit Luft; keine Zudosierung von Substrat)

Die Zusammensetzung des Gärsubstrates war wie bei Variante A. Die Belüftung wurde mit 1 Volumteil Luft je Volumteil Flüssigkeit und Minute durchgeführt. Nach 25 Stunden Belüftung hatte sich ein Ethanolgehalt von 2,9 %vol eingestellt; der pH-Wert betrug 2,5 und die Dichte 1,027 g/cm³. Da noch vergärbare Zucker vorhanden waren, wurde die Belüftung bis zum vollständigen Verbrauch der Zucker ausgedehnt. Dieser Punkt wurde nach 42 Stunden erreicht. Dann hatte sich ein Ethanolgehalt von 1,7 %vol eingestellt, der pH-Wert war bei 2,5 konstant, und die Dichte betrug 1,010 g/cm³. Die Hefemasse betrug nach vollständigem Verbrauch der Zucker (berechnet als Trockenmasse) 2,2 g/l.

Das erhaltene Gärprodukt schmeckte hefig und hatte einen hohen Acetaldehyd-Gehalt, der durch Zugabe von SO₂ abgefangen werden mußte. Die Aromaintensität war deutlich geringer als die des Gärproduktes nach Variante A.

Durch die Begasung wurden also ein Teil des Ethanols sowie die meisten Aromastoffe ausgetrieben.

### Variante D (Strikt anaerobe Gärung)

Die Zusammensetzung des Gärsubstrates war wie bei Variante A, es wurde das Gärsubstrat jedoch strikt anaerob behandelt, d.h. schon vor dem Hefezusatz mit Stickstoff begast. Die Begasungsrate war wie bei Variante C mit 1 Volumteil Luft je Volumteil Flüssigkeit und Minute festgelegt. Die analytischen Daten wurden nach 25 Stunden Begasung bestimmt und zeigten einen Ethanolgehalt von unter 1 g/l bei einem pH-Wert von 3,0 und einer unveränderten Dichte von 1,051 g/cm³. Das bedeutet, daß keine alkoholische Gärung zustande gekommen war.

Das Vergleichsbeispiel macht deutlich, daß einmal die Gärleistung der Hefe im reinen Stickstoffmilieu stark gehemmt ist (Variante D) und zum anderen, daß diese physikalische Behandlung zwar zu einer gewissen, von der Ethanol-Ausgangskonzentration abhängigen Verminderung des Ethanolgehalts führt, die aber nicht auf diese beschränkt ist, sondern alle im Gasstrom flüchtigen Verbindungen umfaßt (Variante C), wodurch schließlich das Gärprodukt an wertvollen und qualitätsbestimmenden Bukettstoffen verarmt und seine Qualität schließlich verliert.

Hingegen wird bei der Herstellung der erfindungsgemäßen Gärprodukte der unvermeidbare Verlust an Bukettstoffen beim Durchleiten von Luft bzw. Sauerstoff durch das mit Hefe versetzte Gärsubstrat dadurch ausgeglichen, daß durch den angeregten Hefestoffwechsel ständig neu Aromastoffe entstehen, von denen nur ein geringer Teil zusammen mit dem Ethanol auch ausgetrieben wird.

Aus dem Vergleichsversuch gemäß Variante C wird deutlich, daß eine Verminderung des Ethanolgehalts von 6,7 %vol bis auf 2,9 %vol im günstigsten Fall nach 25 Stunden Belüftung zu erzielen ist. Unter Berücksichtigung des nach anderen, hier nicht im einzelnen erläuterten Versuchen bestimmten mittleren Austreibeffekts von etwa 1,4 %vol Ethanol, werden 5,3 %vol Ethanol anderweitig entfernt, wobei gleichzeitig die Bildung von weiterem Ethanol aus der Verwertung der noch vorhandenen Zucker verhindert ist. Wahrscheinlich wird bei der aeroben Prozeßführung ein großer Teil der vergärbaren Zucker durch die Hefe veratmet.

In den folgenden Beispielen ist die Herstellung einiger erfindungsgemäßer Gärprodukte erläutert.

### Beispiel 1

Die analytischen Angaben für den verwendeten Traubensüßmost entsprechen denjenigen des Vergleichsbeispiels. Es wurden 250 ml Süßmost mit 0,2 g Hefe, berechnet als Trockenmasse, 0,25 g frisch bereitetem Weinhefeautolysat, berechnet als Trockenmasse (als Quelle für Stickstoff und Vitamin B₁) und 0,3 g Diammoniumphosphat versetzt. Wie im Vergleichsbeispiel wurde bei 25°C fermentiert, und die Belüftung wurde mit 1 Volumteil steriler Luft je Volumteil der aktuellen Flüssigkeitsmenge und Minute analog zur Variante C des Vergleichsbeispiels durchgeführt, wobei sich nach einer Fermentationszeit von 25 Stunden der Ethanolgehalt auf 3,9 %vol, die Dichte auf 1,015 g/cm³ und der pH-Wert auf 2,95 eingestellt hatten.

Anschließend wurden 200 ml Traubensüßmost ohne weitere Zusätze über einen Zeitraum von 24 Stunden zudosiert. Die Belüftung wurde dem aktuellen Flüssigkeitsvolumen im Fermenter angepaßt. Die Zulaufrate von 200 ml Süßmost/24 Stunden wurde bis zum Endvolumen von 1,0 Liter beibehalten. Nach einer Fermentationszeit von 72 Stunden stellte sich ein Gleichgewichtszustand von 1,1 %vol Ethanol bei einem pH-Wert von 2,9 ein; dieser Gleichgewichtszustand war auch dadurch gekennzeichnet, daß die mit dem zuckerhaltigen Substrat eingebrachten Mengen an Glucose und Fructose von der Hefe direkt veratmet wurden, ohne daß sich der Ethanolgehalt erhöhte. Das von der Hefe befreite Gärprodukt hatte auch ohne anaerobe Nachgärung bereits eine weintypische Aromanote.

### Beispiel 2

800 Liter Traubensüßmost, Dichte = 1,059 g/cm³, enthaltend 5,52 Gew.-% Glucose und 6,06 Gew.-% Fructose wurden mit 0,7 kg Trockenweinhefe, 1,34 kg Diammoniumphosphat und 1,75 kg autolysierter Hefe (30 % Trockenmasse) versetzt und in einem Fermenter bei 22 bis 26°C mit 1 Volumteil steriler Luft je Volumteil Flüssigkeit und Minute nach vorangegangener Rehydratationsphase der Trockenhefe 24 Stunden lang begast. Danach wurden 1600 Liter Traubensüßmost innerhalb von 106 Stunden unter Beibehaltung der Belüftungsrate von 1 Volumteil Luft je Volumteil aktueller Flüssigkeitsmenge und Minute zudosiert. 10 Stunden nach Ende der Zudosierung betrug der Ethanolgehalt 1,8 %vol bei einer Dichte von 1,014 g/cm³ und einem pH-Wert von 2,90.

Zur weiteren Verminderung des Ethanolgehalts wurde die Fermentation ohne Zudosierung von Süßmost noch insgesamt 35 Stunden bei einer verringerten Belüftungsrate von 0,5 Volumteilen Luft je Volumteil Flüssigkeit und Minute unter den gleichen Temperaturbedingungen fortgesetzt. Danach betrug der Ethanolgehalt des Gärproduktes 0,3 %vol bei einer Dichte von 1,006 g/cm³ und einem pH-Wert von 2,90. Vergärbare Zucker konnten nicht mehr nachgewiesen werden. Die Hefe wurde vom Gärprodukt abgetrennt, und das Gärprodukt wurde unter Zusatz von 0,5 g Trockenhefe/100 Liter und des anteilsmäßig benötigten Süßmostes zum Erreichen eines definierten Ethanolgehaltes einer anaeroben Nachgärung unterzogen.

Das Gärprodukt hatte ein weintypisches Aroma.

### Beispiel 3

800 Liter Traubensüßmost, Dichte = 1,065 g/cm³, enthaltend 6,3 % Glucose und 6,6 % Fructose, wurden mit 0,7 kg Trockenweinhefe, 1,75 kg Diammoniumphosphat und 1,75 kg autolysierter Hefe (30 % Trockenmasse) versetzt und in einem Fermenter bei 23 bis 25°C mit 1 Volumteil steriler Luft je Volumteil Flüssigkeit und Minute nach vorausgegangener Rehydratationsphase der Trockenhefe 18 Stunden begast. An diesem Punkt betrug der Ethanolgehalt 4,6 %vol bei einer Dichte von 1,020 g/cm³.

Anschließend wurden 600 Liter Traubensüßmost innerhalb von 36 Stunden unter Beibehaltung der Belüftungsrate von 1 Volumteil Luft je Volumteil aktueller Flüssigkeitsmenge und Minute zudosiert. Am Ende der Zudosierung betrug der Ethanolgehalt 3,5 %vol bei einer Dichte von 1,015 g/cm³ und einem pH-Wert von 2,75.

Zur weitergehenden Verminderung des Ethanolgehalts wurde die Fermentation ohne Zudosierung von Süßmost noch 43 Stunden mit einer verringerten Belüftungsrate von 0,5 Volumteilen Luft je Volumteil Flüssigkeit und Minute unter den gleichen Temperaturbedingungen fortgesetzt. Danach hatte das Gärprodukt noch einen Ethanolgehalt von 1,2 %vol bei einer Dichte von 1,010 g/cm³ und einen pH-Wert von 2,84; vergärbare Zucker waren nicht mehr nachweisbar. Die Hefe wurde vom Gärprodukt abgetrennt, und das Gärprodukt wurde unter Zusatz von 0,2 Liter flüssiger Erntehefe/100 Liter und des anteilsmäßig benötigten Süßmostes zum Erreichen eines definierten Ethanolgehaltes einer Nachgärung unterzogen.

Das Gärprodukt hatte ein weintypisches Aroma.

Wurde der vorstehend angegebene Ausgangssüßmost einer klassischen stationären anaeroben Endvergärung unterzogen, so betrug sein Ethanolgehalt 8,1 %vol.

## Patentansprüche

1. Verfahren zur Herstellung von Gärprodukten mit vermindertem Ethanolgehalt aus zuckerhaltigen Fruchtsaft-Substraten, dadurch gekennzeichnet, daß daß man eine erste Teilmenge des Substrats mit einem Gehalt an vergärbaren Zuckern von 5 bis 30 Gew.-% zur Fermentation mit 0,01 bis 5 Gew.-% Hefe (berechnet als Trockensubstanz) und gegebenenfalls mit assimilierbaren Stickstoff- und/oder Phosphorverbindungen versetzt und mit 0,1 bis 2 Volumteilen Luft bzw. der Luft äquivalenten Menge Sauerstoff pro Volumteil Substrat und Minute behandelt, bis sich im Substrat ein Ethanolgehalt von 1 bis 10 %vol, insbesondere bis 7,5 %vol, eingestellt hat; worauf man eine zweite Teilmenge des Substrats unter fortgesetzter Begasung mit Luft bzw. mit Sauerstoff zudosiert.

2. Verfahren nach Anspruch 1, dadurch gekennzeichnet, daß die erste Teilmenge des Substrats 20 bis 80 Gew.-%, vorzugsweise 30 bis 60 Gew.-% des Gesamtsubstrats beträgt.

3. Verfahren nach Anspruch 1 oder 2, dadurch gekennzeichnet, daß die Konzentration der assimilierbaren Stickstoff- und/oder Phosphorverbindungen in der ersten Teilmenge des Substrats 0,01 bis 2 Gew.-%, vorzugsweise 0,03 bis 1 Gew.-% beträgt.

4. Verfahren nach einem der Ansprüche 1 bis 3, dadurch gekennzeichnet, daß man die Fermentation bei 10 bis 40°C, vorzugsweise bei 20 bis 30°C und einem pH-Wert von 2 bis 6, vorzugsweise von 2,5 bis 4, durchführt.

5. Verfahren nach einem der Ansprüche 1 bis 4, dadurch gekennzeichnet, daß man die erste Teilmenge des Substrats mit 0,25 bis 1,5 Volumteilen Luft bzw. der Luft äquivalenten Menge Sauerstoff je Volumteil Substrat und Minute behandelt.

6. Verfahren nach einem der Ansprüche 1 bis 5, dadurch gekennzeichnet, daß man die zweite Teilmenge des Substrats mit einer Zugaberate von 0,5 bis 10 Gew.-%, vorzugsweise von 2 bis 8 Gew.-% (bezogen auf das gesamte Substrat) pro Stunde zudosiert.

7. Verfahren nach einem der Ansprüche 1 bis 6, dadurch gekennzeichnet, daß man nach Beendigung der Zudosierung der zweiten Teilmenge des Substrats zur weiteren Verminderung des Ethanolgehalts die Begasung mit Luft bzw. Sauerstoff fortsetzt, bis die vergärbaren Zucker weitgehend verbraucht sind.

8. Verfahren nach einem der Anspüche 1 bis 7, dadurch gekennzeichnet, daß man nach der Zudosierung der zweiten Teilmenge des Substrats und gegebenenfalls nach fortgesetzter Begasung mit Luft bzw. Sauerstoff eine anaerobe Gärung anschließt.

9. Verfahren nach einem der Ansprüche 1 bis 8, dadurch gekennzeichnet, daß man als zuckerhaltigen Fruchtsaft Traubenmost einsetzt.

10. Verfahren nach einem der Ansprüche 1 bis 9, dadurch gekennzeichnet, daß man als Ausgangssubstrat ein keimfreies Fruchtsaft-Substrat, insbesondere ein von Essigbakterien freies Substrat, einsetzt.

11. Verfahren nach einem der Ansprüche 1 bis 10, dadurch gekennzeichnet, daß man Hefe aus den Gattungen Saccharomyces, Schizosaccharomyces, Saccharomycodes, Torulopsis und/oder Kluyveromyces verwendet.

12. Verfahren nach einem der Ansprüche 1 bis 11, dadurch gekennzeichnet, daß man immobilisierte Hefe verwendet.

## Claims

1. Method of producing fermentation products with a reduced ethanol content from sugar-containing fruit juice substrates, characterized in that a first partial amount of the substrate having a content of fermentable sugars of from 5 to 30 % by weight is mixed for fermentation with 0.01 to 5 % by weight of yeast (calculated as dry substance) and optionally with assimilatable nitrogen and/or phosphorus compounds, and is treated with 0.1 to 2 parts by volume of air or the equivalent amount of oxygen per part by volume of substrate and minute until an ethanol content of from 1 to 10 % by volume, in particular 7.5 % by volume has been established in the substrate; and afterwards a second partial amount of the substrate is dosed in while continuing gassing with air or oxygen.

2. Method according to claim 1, characterized in that the first partial amount of the substrate amounts to 20 to 80 % by weight, preferably 30 to 60 % by weight, of the total substrate.

3. Method according to claims 1 or 2, characterized in that the concentration of the assimilatable nitrogen and/or phosphoros compounds in the first partial amount of the substrate amounts to 0.01 to 2 % by weight, preferably 0.3 to 1 % by weight.

4. Method according to any one of claims 1 to 3, characterized in that the fermantation is carried out at 10 to 40 °C, preferably at 20 to 30 °C and at a pH of from 2 to 6, preferably from 2.5 to 4.

5. Method according to any one of claims 1 to 4 characterized in that the first partial amount of the substrate is treated with 0.25 to 1.5 parts by volume of air or with the equivalent amount of oxygen, per part by volume of substrate and minute.

6. Method according to any one of claims 1 to 5, characterized in that the first partial amount of the substrate is dosed in at a rate of addition of from 0.5 to 10 % by weight, preferably from 2 to 8 % by weight (based on the total substrate) per hour.

7. Method according to any one of claims 1 to 6, charactized in that after completion of the dosage of the second partial amount of the substrate, the gassing with air or oxygen is continued to further reduce the ethanol content until the fermentable sugars have been largely consumed.

8. Method according to any one of claims 1 to 7, characterized in that, after the dosage of the second partial amount of the substrate and, optionally after continued gassing with air or oxygen, an anaerobic fermenation is performed.

9. Method according to any one of claims 1 to 8, characterized in that grape must is used as a sugar-containing fruituice.

10. Method according to any one of 1 to 9, characterized in that a germ-free fruit juice substrate, in particular a substrate that is free from vinegar bacteria, is used as starting substrate.

11. Method according to any one of claims 1 to 10 characterized in that yeast of the genera saccharomyces, schizosaccharomycodes, torulopsis and/or kluyveromyces are used.

12. Method according to any one of claims 1 to 11, characterized in that immobilized yeast is used.

## Revendications

1. Procédé pour préparer des produits fermentés à teneur réduite en éthanol, à partir de substrats sucrés à base de jus de fruits, caractérisé en ce que, pour la fermentation, on ajoute à une première quantité partielle du substrat, ayant une teneur en sucres fermentescibles de 5 à 30 %, de 0,01 à 5 % en poids d'une levure (quantité exprimée en extrait sec), et éventuellement des composés assimilables de l'azote et/ou du phosphore, et qu'on la traite avec une quantité de 0,1 à 2 parties en volume d'air ou avec la quantité d'oxygène correspondant à cette quantité d'air, par partie en volume de substrat et par minute, jusqu'à ce que la teneur du substrat en éthanol s'ajuste à une valeur de 1 à 10 % en volume, en particulier inférieure ou égale à 7,5 % en volume, ce après quoi on ajoute une deuxième quantité partielle du substrat, tout en introduisant, d'une manière continue, de l'air ou de l'oxygène.

2. Procédé selon la revendication 1, caractérisé en ce que la première quantité partielle du substrat est de 20 % à 80 %, et de préférence de 30 % à 60 % en poids du substrat total.

3. Procédé selon la revendication 1 ou 2, caractérisé en ce que la concentration des composés assimilables de l'azote et/ou du phosphore dans la première quantité partielle du substrat est de 0,01 % à 2 %, et de préférence de 0,03 % à 1 % en poids.

4. Procédé selon l'une des revendications 1 à 3, caractérisé en ce que la fermentation est mise en oeuvre a une température de 10°C à 40°C, et de préférence de 20°C à 30°C, et à un pH de 2 à 6, et de préférence de 2,5 à 4.

5. Procédé selon l'une des revendications 1 à 4, caractérisé en ce qu'on traite la première quantité partielle du substrat avec de 0,25 à 1,5 partie en volume d'air, ou la quantité d'oxygène équivalente à cette quantité d'air, par partie en volume de substrat et par minute.

6. Procédé selon l'une des revendications 1 à 5; caractérisé en ce que la deuxième quantité partielle du substrat est ajoutée à un débit d'addition de 0,5 % à 10 %, et de préférence de 2 % à 8 % en poids (par rapport à la totalité du substrat) par heure.

7. Procédé selon l'une des revendications 1 à 6, caractérisé en ce que, après la fin de l'addition de la deuxième quantité partielle du substrat, et pour diminuer encore plus la teneur en éthanol, on poursuit l'introduction d'air ou d'oxygène jusqu'à ce que le sucre fermentescible soit presque complètement consommé.

8. Procédé selon l'une des revendications 1 à 7, caractérisé en ce que, après addition de la deuxième quantité partielle du substrat, et éventuellement après avoir introduit de l'air ou de l'oxygène, on procède à une fermentation anaérobie.

9. Procédé selon l'une des revendications 1 à 8, caractérisé en ce qu'on utilise, comme jus de fruits sucré, du moût de raison.

10. Procédé selon l'une des revendications 1 à 9, caractérisé en ce qu'on utilise comme substrat de départ, un substrat de type jus de fruits stérile, en particulier un substrat ne comportant pas de bactéries du vinaigre.

11. Procédé se l'une des revendications 1 à 10, caractérisé en ce qu'on utilise une levure choisie parmi les espèces Saccharomyces, Schizosaccharomyces, Saccharomycodes, Torulopsis et/ou Kluyveromyces.

12. Procédé selon l'une des revendications 1 à 11, caractérisé en ce qu'on utilise une levure immobilisée.
